# EUROPÄISCHE PATENTSCHRIFT

(11) **EP 3 775 534 B1**
(45) Veröffentlichungstag und Bekanntmachung des Hinweises auf die Patenterteilung: **18.09.2024**
(21) Anmeldenummer: 19719181.0
(22) Anmeldetag: 10.04.2019
(51) Int. Cl.: F03D 1/06

(54) **ROTORNABE EINER WINDENERGIEANLAGE, SOWIE VERFAHREN ZUR MONTAGE EINER SOLCHEN ROTORNABE**
ROTOR HUB OF A WIND TURBINE, AND METHOD FOR ASSEMBLING SUCH A ROTOR HUB
MOYEU DE ROTOR D'UNE INSTALLATION D'ÉNERGIE ÉOLIENNE, ET PROCÉDÉ DE MONTAGE D'UN TEL MOYEU DE ROTOR

(30) Priorität: 11.04.2018 DE 102018108610
(43) Veröffentlichungstag der Anmeldung: 17.02.2021
(73) Patentinhaber: Wobben Properties GmbH, 26607 Aurich (DE)
(72) Erfinder: SCHMID, Jonas, 26655 Westerstede (DE); GERDES, Frank, 26629 Großefehn (DE); JANßEN, Aike, 26723 Emden (DE)
(74) Vertreter: Eisenführ Speiser
(86) Internationale Anmeldenummer: PCT/EP2019/059141
(87) Internationale Veröffentlichungsnummer: WO 2019/197490

(56) Entgegenhaltungen:
- CN-U- 205 370 866
- DE-A1- 102007 008 167
- DE-A1- 102010 043 435
- US-A1- 2016 312 766
- GETTY IMAGES: "Wind turbine manufacturing at Electric Group Co,, Zhongshan, Guangdong, China", 31 July 2009 (2009-07-31), pages 1 - 2, XP093019395, Retrieved from the Internet <URL:https://www.gettyimages.dk/detail/news-photo/wind-turbine-manufacturing-at-electric-group-co-zhongshan-news-photo/976696044?adppopup=true> [retrieved on 20230131]
- WWW: "PC-based Control for Wind Turbines", 1 January 2016 (2016-01-01), pages 8 - 9, XP093019397, Retrieved from the Internet <URL:https://www.pc-control.net/pdf/wind_compendium_2016/pcc_wind-compendium_2016_e.pdf> [retrieved on 20230131]

## Beschreibung

Die Erfindung betrifft eine Rotornabe einer Windenergieanlage gemäß den Merkmalen des Oberbegriffs von Anspruch 1.

In der prioritätsbegründenden deutschen Anmeldung hat das Deutsche Patent- und Markenamt die folgenden Dokumente recherchiert: DE102007088167 A1, DE102010043435 A1, DE102014200276 A1, DE202005007450 U1 und WO2015/090655 A1.

Aus US 2016/0312766 A1 ist ferner_eine Pitchantriebs-Anordnung für ein Rotorblatt einer Windenergieanlage bekannt. An einem feststehenden Ring an der Rotornabe ist innenseitig eine Brücke angeordnet, auf der Akkumulatoren und elektrische Bauteile jeweils einzeln befestigt sind.

CN 205 370 866 U zeigt eine Rotornabe für eine Windturbine, welche ein Gehäuse aufweist, an dem mehrere Befestigungsflansche für jeweils mittels Pitchantrieben verstellbare Rotorblätter vorgesehen sind. Jeder Befestigungsflansch weist eine Montageplatte auf, wobei über Montagebohrungen ein elektrische Steuergeräte aufweisender Schachtsteuerschrank an der Außenseite der Montageplatte befestigt ist.

Windenergieanlagen werden heutzutage üblicherweise mit Rotorblättern ausgerüstet, deren Anstellwinkel zum Wind motorisch geändert werden kann. Hierdurch wird es möglich, die Menge der vom Wind aufgenommenen "mechanischen" Energie zu beeinflussen. Soll die Leistungsaufnahme, und damit auch die Erzeugung elektrischer Leistung durch die Windenergieanlage, bei hohen Windlasten oder hoher Netzauslastung verringert werden, wird mittels der Pitchantriebe der Blattwinkel so verändert, dass weniger mechanische Energie vom Blatt aufgenommen wird, und die Rotationsgeschwindigkeit der Rotornabe abnimmt. Steuer- und Regelverfahren zum Verändern des Pitchwinkels sind allgemein bekannt.

Zum Ansteuern der Pitchantriebe sind, insbesondere bei der Umsetzung eines komplexen Regelverhaltens, elektrische Steuergeräte notwendig, die einerseits die Erfassung von Betriebsgrößen und Umgebungscharakteristika wie beispielsweise der Windgeschwindigkeit, Windrichtung und Böhigkeit, zum Ziel haben, und andererseits solche, die die Steuerung beziehungsweise Regelung des Pitchwinkels der angeschlossenen Rotorblätter in Abhängigkeit der erfassten Größen zur Aufgabe haben.

Die Steuergeräte werden üblicherweise in der Gondel der Windenergieanlage untergebracht. Es hat sich hierbei als vorteilhaft herausgestellt, die Steuerkomponenten direkt auf dem rotierenden Teil der Gondel anzuordnen. Aus dem Stand der Technik sind Windenergieanlagen bekannt, bei denen die elektrischen Steuergeräte zur Ansteuerung des Pitchantriebs der Rotorblätter im vordersten Teil der Rotornabe unter der sog. Spinnerkappe angeordnet werden. Aufgrund des nur begrenzt vorhandenen Arbeitsvolumens ist zum einen die Montage der Steuergeräte mit gewissem Aufwand verbunden gewesen. Zum anderen sind die Steuergeräte nach erfolgter Installation im Betrieb nicht immer einfach zugänglich, so dass diesbezüglich Verbesserungsbedarf gesehen wird.

Es sind aus dem Stand der Technik ferner Anlagentypen bekannt, insbesondere Anlagen der 4 MW-Klasse und aufwärts, bei denen die Rotorblätter mittels großvolumiger Blattadapter an die Rotornabe angeschlossen wurden. Die elektrischen Steuergeräte wurden bei solchen Windenergieanlagen üblicherweise im Blattadapter untergebracht. Auch bezüglich dieser Gestaltung war die spätere Zugänglichkeit zu den Steuergeräten vom Inneren des Nabengehäuses her schwierig, und die Montage vollzog sich ebenfalls in einer Vielzahl von Installationsstufen.

Vor diesem Hintergrund lag der Erfindung die Aufgabe zugrunde, eine Rotornabe der eingangs bezeichneten Art dahingehend weiterzuentwickeln, dass die vorbekannten Nachteile möglichst weitgehend überwunden werden. Insbesondere lag der Erfindung die Aufgabe zugrunde, eine Rotornabe der eingangs bezeichneten Art dahingehend zu verbessern, dass die Montage der elektrischen Steuergeräte vereinfacht wird. Ferner lag der Erfindung insbesondere die Aufgabe zugrunde, die Rotornabe dahingehend weiterzuentwickeln, dass die Zugänglichkeit zu den elektrischen Steuergeräten von innerhalb des Nabengehäuses, etwa zu Wartungszwecken, verbessert wird.

Die Erfindung löst die ihr zugrunde liegende Aufgabe bei einer Rotornabe der eingangs bezeichneten Art, indem die Anordnung der Steuergeräte in einem Modul als bauliche Einheit ausgebildet ist, wobei das Modul als Ganzes an das Nabengehäuse angeschlossen ist, und wobei das Modul eine Tragstruktur aufweist, an welcher die Anordnung der Steuergeräte befestigt ist, wobei die Tragstruktur von außerhalb des Nabengehäuses gegen den ihr jeweils zugeordneten Anschlussflansch befestigt ist. Die Erfindung macht sich hier zunutze, dass die Vormontage der elektrischen Steuergeräte zu einem Modul als bauliche Einheit vollständig außerhalb der Rotornabe erfolgen kann, so dass zur Montage der Steuergeräte an dem Modul ausreichend Platz zur Verfügung steht und sowohl die Befestigung am Modul als auch die Verkabelung der Steuergeräte untereinander, soweit erforderlich, ohne Platzrestriktionen vom Montagepersonal schnell und einfach erledigt werden kann.

Das Modul weist vorzugsweise eine Schnittstelle zur Befestigung an dem jeweiligen Anschlussflansch der Rotornabe auf. Die Schnittstelle ist vorzugsweise ein korrespondierend sowohl am Anschlussflansch wie auch am Modul ausgebildetes Bohrbeziehungsweise Schraubbild. Die Schnittstelle ist vorzugsweise so ausgebildet, dass die Montage des Moduls in exakt einer Ausrichtung erfolgen kann. Hierdurch wird die Gefahr einer Fehlmontage oder fehlerhaften Ausrichtung des Moduls an der Rotornabe gebannt.

Vorzugsweise werden an der Schnittstelle zur Montage des Moduls an dem Anschlussflansch eine oder mehrere Dämpfungsmittel zwischen Modul und Anschlussflansch zwischengeordnet, um die Übertragung mechanischer Schwingungen zwischen Nabengehäuse und den elektrischen Steuergeräten zu schwächen. Dies wirkt sich insbesondere vorteilhaft auf die in den Steuergeräten verwandte Messtechnik aus.

In einer bevorzugten Ausführungsform ist die Tragstruktur dazu eingerichtet, die Rotornabe insbesondere im Bereich des Anschlussflansches in ihrem installierten Zustand zu versteifen. Die Erfindung macht sich in diesem Aspekt den Vorteil zunutze, dass der Tragstruktur für die elektrischen Steuergeräte eine Doppelfunktion zukommt. Einerseits übernimmt sie die Versteifung im Bereich des Anschlussflansches, andererseits trägt sie die elektrischen Steuergeräte. Hierdurch kann bei korrekter Dimensionierung der Tragstruktur auf zusätzliche Versteifungselemente im Bereich des Anschlussflansches verzichtet werden, was sich wiederum positiv auf den insgesamten Installationsaufwand für die Rotornabe auswirkt.

Erfindungsgemäß weisen zudem die Anschlussflansche der Rotornabe jeweils eine Flanschebene und eine Durchgangsöffnung auf, wobei die Durchgangsöffnung auf die Flanschebene projizierte Querschnittsfläche aufweist, und sämtliche Steuergeräte innerhalb der projizierten Querschnittsfläche angeordnet sind. Wenn beispielsweise die Durchgangsöffnung eine kreisförmige Ausnehmung im Anschlussflansch ist, wird sie, auf die Flanschebene projiziert, eine kreisförmige Querschnittsfläche definieren. Sämtliche Steuergeräte sind dann vorzugsweise innerhalb dieser kreisförmigen Querschnittsfläche angeordnet, also radial innerhalb der Querschnittsfläche positioniert, so dass kein Teil der Steuergeräte radial außerhalb jener Querschnittsfläche läge. Die Ausgestaltung hat den besonderen Vorteil, dass das Modul in vollständig montierter Form von außen gegen den Anschlussflansch geschoben werden kann und die Funktion sämtlicher Steuergeräte in nur einem einzigen Arbeitsschritt vollzogen wird, ohne dass die Steuergeräte am Modul beispielsweise noch in eine besondere Transportstellung gerückt werden müssen, aus der sie nach Installation des Moduls wieder zurückgestellt werden müssten, um betriebsbereit zu werden.

Erfindungsgemäß ist die Tragstruktur von außerhalb des Nabengehäuses gegen den ihr jeweils zugeordneten Anschlussflansch befestigt. Die Befestigung der Tragstruktur am Anschlussflansch erfolgt vorzugsweise mittels Verschraubung. Die Verschraubung von außen bietet wiederum den Vorteil, dass außerhalb des Nabengehäuses deutlich mehr Platz für den Einsatz von Werkzeugen und den Bewegungsfreiraum für Personal zur Verfügung steht.

Gemäß der Erfindung weist die Tragstruktur eine Mehrzahl von miteinander winklig verbundenen Tragstreben auf. Die winklig miteinander verbundenen Tragstreben, die beispielsweise fachwerkartig oder im 90°-Winkel zueinander verlaufen können, bilden eine effektive Versteifung für das Modul und tragen im installierten Zustand am Anschlussflansch zu dessen Versteifung bei. Gleichzeitig ermöglichen sie einen flexiblen Aufbau der Steuergeräte entlang der Tragstreben. Die Tragstruktur kann sich im Wesentlichen in der Ebene oder parallel zur Ebene des Anschlussflansches erstrecken, oder aber auch senkrecht dazu in die Tiefenrichtung, d.h. Einführrichtung durch den Anschlussflansch hindurch.

In einer weiteren bevorzugten Ausführungsform weist die Tragstruktur eine Trittfläche auf, welche die Durchgangsöffnung des Anschlussflansches abdeckt. Somit wird die Tragstruktur zugleich zur Arbeitsbühne für Wartungspersonal innerhalb der Rotornabe.

Alternativ oder zusätzlich zu der vorstehend beschriebenen Verwendung von Tragstreben, weist die Tragstruktur vorzugsweise eine Versteifungsscheibe auf. In dieser Ausführungsform ist vorzugsweise die Trittfläche als eine, vorzugsweise die innere der beiden Oberflächen der Versteifungsscheibe ausgebildet.

In einer weiteren bevorzugten Ausführungsform weist das Modul ein mit einer Abdeckung versehenes Mannloch auf, welches zum Durchtritt von innerhalb des Nabengehäuses in das Rotorblatt hinein ausgebildet ist. In Ausführungsformen, in denen das Modul eine Trittfläche aufweist, erstreckt sich das Mannloch vorzugsweise als Ausnehmung durch die Trittfläche hindurch. Das Mannloch ist vorzugsweise mittels einer Luke bedeckt, die wahlweise geöffnet oder geschlossen werden kann, wobei die Luke ebenfalls als Trittfläche dient, wenn sie sich in geschlossener Stellung befindet.

Die Erfindung ist vorstehend unter Bezugnahme auf die Rotornabe anhand eines ersten Aspektes beschrieben worden. In einem weiteren Aspekt betrifft die Erfindung ferner ein Verfahren zur Montage einer Rotornabe einer Windenergieanlage, insbesondere einer Rotornabe nach einer der vorstehend beschriebenen bevorzugten Ausführungsformen. Die Erfindung löst die ihr zugrundeliegende, eingangs bezeichnete Aufgabe, indem das Verfahren die Schritte umfasst:
- Bereitstellen eines Nabengehäuses, welches mehrere Anschlussflansche aufweist, die jeweils zum Anschluss eines Rotorblatts eingerichtet sind, wobei die Anschlussflansche jeweils eine Flanschebene und eine Durchgangsöffnung aufweisen, wobei die Durchgangsöffnung eine auf die Flanschebene projizierte Quer-schnittsfläche aufweist, und jedes der Rotorblätter mit einem Pitchantrieb zum Drehen des Rotorblatts gekoppelt ist, sowie entweder
   a) Montieren einer Anordnung elektrischer Steuergeräte zur Ansteuerung des Pitchantriebs derart auf einem Modul, dass die Anordnung eine bauliche Einheit ausbildet oder
   b) Bereitstellen eines Moduls, welches eine Anordnung elektrischer Steuergeräte zur Ansteuerung des Pitchantriebs als bauliche Einheit aufweist;
- Anschließen des Moduls als Ganzes an das Nabengehäuse mittels einer eine Mehrzahl von miteinander winklig verbundenen Tragstreben aufweisenden Tragstruktur, an welcher die Anordnung der Steuergeräte befestigt ist, wobei die Tragstruktur von außerhalb des Nabengehäuses gegen den ihr jeweils zugeordneten Anschlussflansch befestigt wird, so dass sämtliche Steuergeräte innerhalb der projizierten Querschnittfläche angeordnet sind, und
- Verbinden der elektrischen Steuergeräte mit dem Pitchantrieb.

Das erfindungsgemäße Verfahren macht sich die gleichen Vorteile und bevorzugten Ausführungsformen zunutze wie die vorstehend beschriebene Rotornabe, so dass diesbezüglich zur Vermeidung von Wiederholungen auf die obigen Ausführungen verwiesen wird. Es macht sich besonders vorteilhaft bemerkbar, dass nach dem erfindungsgemäßen Verfahren die Installation sämtlicher elektrischer Steuergeräte innerhalb des Nabengehäuses in nur einem Arbeitsschritt vollzogen werden kann, sobald die elektrischen Steuergeräte auf dem Modul angeordnet wurden.

Die Montage elektrischer Steuergeräte zur Ansteuerung des Moduls kann alternativ ausgelagert und örtlich und zeitlich separat von der Montage der Rotornabe selbst vorgenommen werden. Das Modul kann als fertige Einheit zur Montage der Rotornabe transportiert werden.

Nach dem Anschluss des Moduls an die Rotornabe muss nur noch die Verbindung zu den Pitchantrieben erfolgen, sofern diese nicht ebenfalls bereits mit in das Modul integriert werden, was zugleich auch eine bevorzugte Ausführungsform der Erfindung darstellt.

Das Verfahren wird dadurch weitergebildet, dass die Rotornabe an jedem Anschlussflansch einen Blattadapter aufweist, und der Schritt des Montierens der Module mit den elektrischen Steuergeräten vor dem Montieren des Blattadapters erfolgt.

Weiter vorzugsweise umfasst das Verfahren den Schritt des Versteifens der Rotornabe mittels des Schritts des Anschließens des Moduls.

Die Erfindung wird im Folgenden unter Bezugnahme auf die beigefügten Figuren anhand bevorzugter Ausführungsbeispiele beschrieben. Hierbei zeigen:
- Fig. 1: eine Windenergieanlage gemäß einem bevorzugten Ausführungsbeispiel,
- Fig. 2: eine schematische räumliche Ansicht einer Rotornabe gemäß einem ersten bevorzugten Ausführungsbeispiel,
- Fig. 3: eine schematische räumliche Ansicht eines Moduls für die Rotornabe gemäß Figur 2,
- Fig. 4: eine Detailansicht des Moduls gemäß Figur 3,
- Fig. 5: eine Seitenansicht der Rotornabe gemäß Fig.2 mit eingesetztem Modul,
- Fig. 6: eine weitere räumliche schematische Ansicht der Rotornabe gemäß Figur 2 und Figur 5 mit weiteren Anbauteilen,
- Fig. 7: eine schematische räumliche Teilansicht einer Rotornabe gemäß einem zweiten Ausführungsbeispiel.

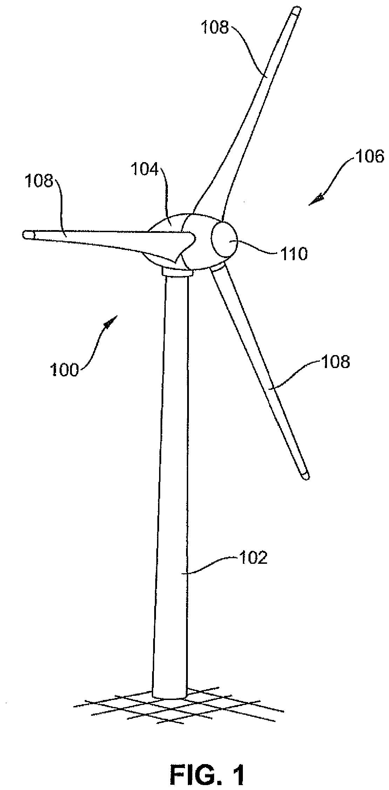

Figur 1 zeigt eine Windenergieanlage 100 mit einem Turm 102 und einer Gondel 104. An der Gondel 104 ist eine Rotornabe 1 mit drei Rotorblättern 108 und (optional) einem Spinner 110 angeordnet. Die Rotorblätter 108 sind mit ihrer Rotorblattwurzel an einer Rotornabe angeordnet. Die Rotornabe 1 wird im Betrieb durch den Wind in eine Drehbewegung versetzt und treibt dadurch einen (nicht dargestellten) Generator in der Gondel 104 an.

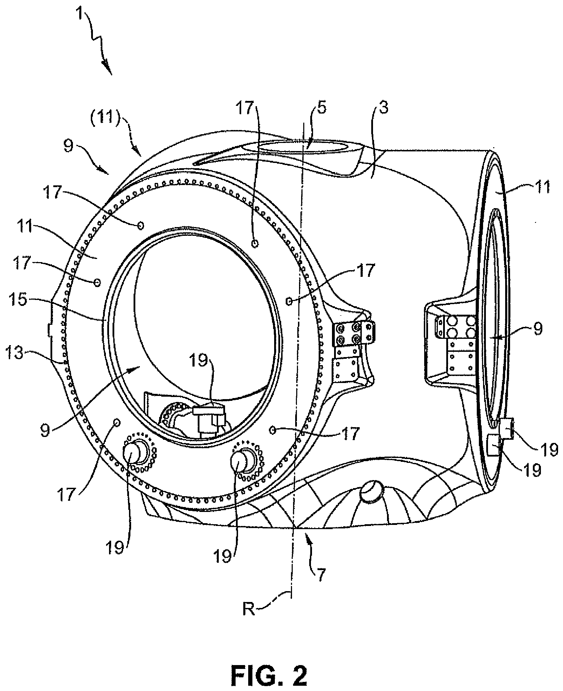

In Figur 2 ist die Rotornabe 1 gemäß der vorliegenden Erfindung zu sehen. Die Rotornabe 1 weist ein Nabengehäuse 3 auf. In dem Nabengehäuse 3 ist ein Mannloch 5 zum Durchgang zur Nabenspitze hin vorgesehen. Durch das Mannloch 5 hindurch ist die Kappe (nicht dargestellt) der Rotornabe 1, auch bezeichnet als Spinnerkappe, später zugänglich.

Gegenüberliegend von dem Mannloch 5 weist die Rotornabe 1 einen Anschlussflansch 7 zur Verbindung der Rotornabe 1 mit einer Drehverbindung auf. Die Rotornabe 1 kann in allgemein bekannter Weise mit dem Rest der Gondel 104 der Windenergieanlage 100 verbunden werden.

Eine Rotorachse R erstreckt sich in Längsrichtung durch die Rotornabe 1 hindurch.

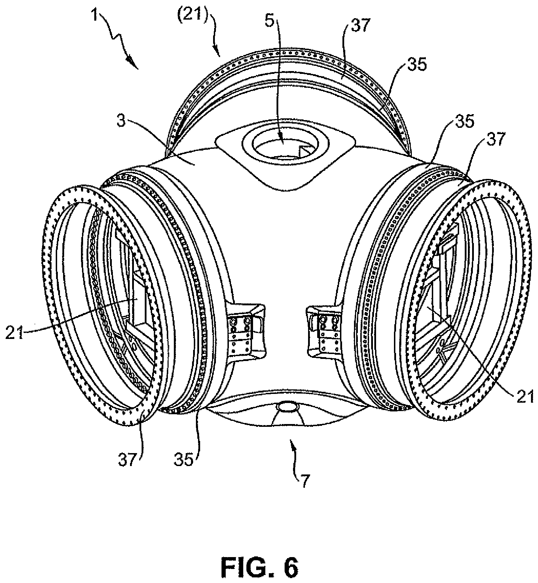

Die Rotornabe 1 weist eine Mehrzahl von Anschlussanschnitten zur Verbindung der Rotornabe 1 mit jeweils einem Rotorblatt 108 auf, wobei in den Anschlussabschnitten jeweils ein Anschlussflansch 11 vorgesehen ist. Der Anschlussflansch 11 weist, begrenzt durch eine Innenkante 15, jeweils eine Durchgangsöffnung 9 ins Innere der Rotornabe 1 auf. Am äußeren Umfangsende weist der Anschlussflansch 11 ein Bohrbild 13 zum Anschluss eines Blattflanschlagers 35 oder Blattadapters 37 auf (vgl. Figur 6). Zusätzlich weist der Anschlussflansch 11 radial gesehen zwischen der Innenkante 15 und dem äußeren Umfangsrand ein zweites Bohrbild auf, welches als Schnittstelle 17 zur Befestigung eines erfindungsgemäßen Moduls dimensioniert ist (vgl. Figuren 2 bis 5).

An der Rotornabe 1 ist für jeden Anschlussflansch 11 und somit für jedes Rotorblatt jeweils ein Pitchantrieb in Form von zwei Antriebsmotoren 19 angeordnet. Die Antriebsmotoren 19 sind dazu eingerichtet, mit einer korrespondierenden Verzahnung zu interagieren und so das Rotorblatt 108 im angeschlossenen Zustand in den gewünschten Pitchwinkel zu versetzen.

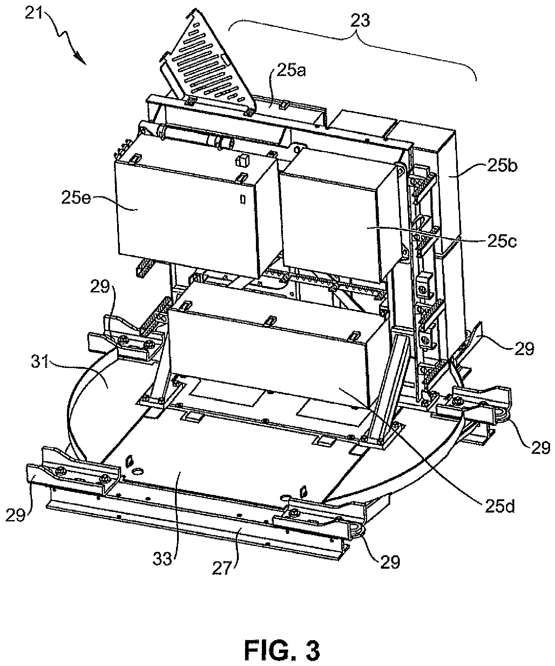

Die Durchgangsöffnungen 9 sind dazu eingerichtet, beispielsweise das Modul 21 gemäß Figur 3 aufzunehmen. Das Modul 21 weist eine Anordnung 23 elektrischer Steuergeräte 25a - e auf, die auf dem Modul 21 zu einer baulichen Einheit zusammengefasst sind.

Das Modul 21 weist eine Tragstruktur 27 auf, an der die Anordnung 23 der elektrischen Steuergeräte 25a - e befestigt ist. An der Tragstruktur 27 sind jeweils Anschlusspunkte 29 vorgesehen, die mit der Schnittstelle 17 am Anschlussflansch 11 der Rotornabe 1 (Figur 2) korrespondieren.

Die elektrischen Steuergeräte 25a - e sind beispielsweise ausgewählt aus der Liste bestehend aus Schaltschrank Blattregelung, Transformator, Blattrelais, Kondensatormodul, Akustiksensor, Schaltschrank Lastregelung, Schaltschrank Kommunikationstechnik, Blitzstromdetektor, Eisansatzerkennung, Steuerschrank Blattheizung.

Die Steuergeräte 25a - e sind derart an der Tragstruktur 27 befestigt und positioniert, dass sie, projiziert auf die Ebene des Anschlussflansches 11 auf einer kleineren Fläche stehen, als sie durch die Öffnungsfläche der Durchgangsöffnung 9 definiert wird. Die Steuergeräte 25a - e sind derart auf der Tragstruktur 27 positioniert, dass sie mitsamt der Tragstruktur 27 als ganzes Modul in einem Schritt in das Innere der Rotornabe 1 durch die Durchgangsöffnung 9 hindurch eingeführt werden können, bis die Anschlusspunkte 29 an dem Anschlussflansch 11 und der entsprechenden Schnittstelle 17 anliegen. Vorzugsweise weist das Modul 21 eine Trittfläche 31 auf, die nach Art einer Arbeitsbühne im Betrieb der Windenergieanlage bei entsprechend stillstehenden Rotorblättern und stillstehender Rotornabe 1 betreten werden kann.

Das Modul weist ferner eine Luke 33 auf, die den Durchtritt vom Inneren der Rotornabe 1 nach außen in die Rotorblätter hinein ermöglicht, und die vorzugsweise im geschlossenen Zustand (gezeigt in Fig. 3) auch begehbar ist.

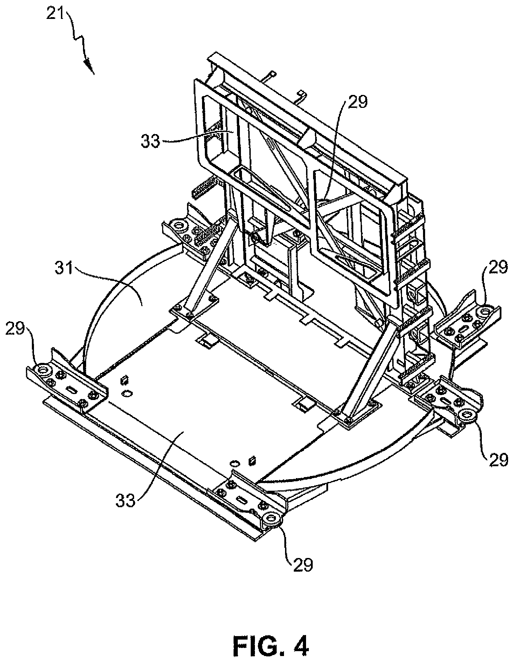

In Figur 4 ist die Tragstruktur 27 des Moduls 21 mit ausgeblendeten elektrischen Steuergeräten gezeigt. Mit der schon in Figur 2 gezeigten Tragstruktur 27 ist ein zweiter Tragstrukturteil 29 fest verbunden, der zur unmittelbaren Aufnahme der Steuergeräte 25a - e dient. Die Tragstruktur 27, 29 ist aus mehreren winklig zueinander angeordneten, aneinander befestigten Tragstreben ausgebildet, die, insbesondere bezogen auf den ersten Teil 27, der Tragstruktur eine vorzugsweise versteifende Wirkung auf den Anschlussflansch 11 ausüben, wenn das Modul 21 am Anschlussflansch 11 montiert ist.

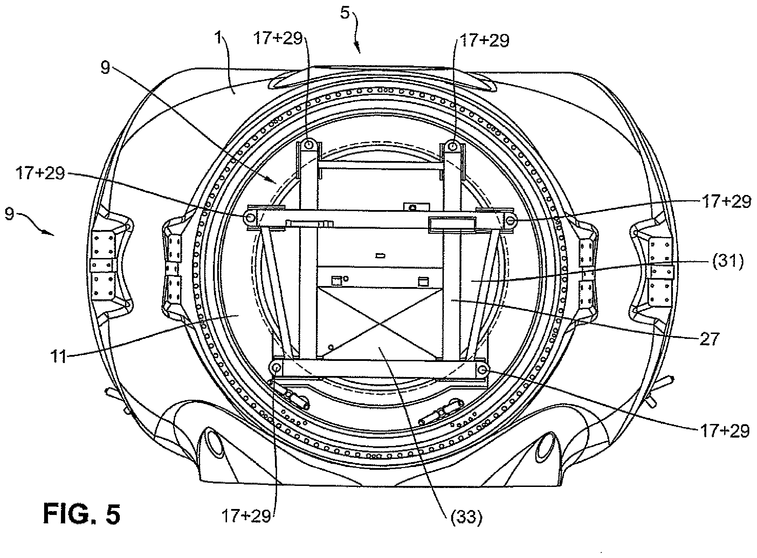

Während die Rotornabe 1 und das die Steuergeräte 25a - e enthaltende Modul 21 in den Figuren 2 bis 4 jeweils separat gezeigt wurden, ist in Figur 5 die Rotornabe 1 mit montiertem Modul 21 abgebildet. Die Anschlusspunkte 29 sind jeweils mit der korrespondierenden Schnittstelle 17 verbunden, insbesondere verschraubt. Die entsprechend ausgerichteten Tragstreben der Tragstruktur 27 versteifen optional den Anschlussflansch 11. Vorzugsweise sind Dämpfelemente zwischen den Anschlusspunkten 29 und der Schnittstelle 17 vorgesehen, welche das Ausbreiten mechanischer Schwingungen zwischen dem Gehäuse der Rotornabe 1 und den elektrischen Steuergeräten 25a - e (Figur 3) zumindest abschwächen.

In Figur 6 ist eine weitere Darstellung des Zusammenbauzustandes abgebildet, der auch in Figur 5 schon zu sehen war. Zusätzlich zu dem nun montierten Modul 21 sind an der Rotornabe 1 ferner an jedem Anschlussflansch 11 ein Blattflanschlager 35 ein Blattadapter 37 angebracht. Die Rotornabe 1 ist somit nunmehr, rein vom mechanischen her, zur Aufnahme der Rotorblätter vorbereitet. Es wird in aller Regel zweckmäßig sein, die Rotornabe 1 noch mit einer Verkleidung zu versehen, die aus Gründen der Übersichtlichkeit in den vorliegenden Figuren aber ausgeblendet wurde.

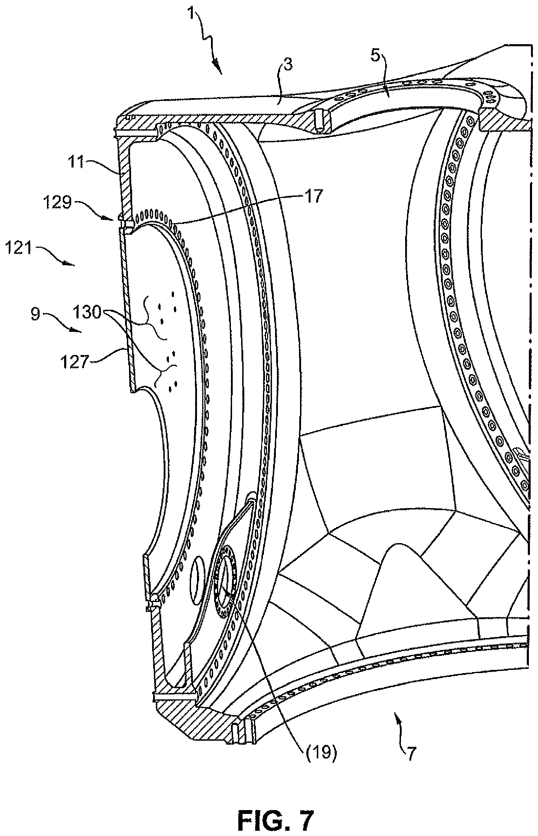

In Figur 7 ist ein alternatives Ausführungsbeispiel einer Rotornabe 1 gemäß der Erfindung gezeigt. Die Rotornabe 1 und das Nabengehäuse 3 sind im Wesentlichen gleich aufgebaut wie in den Figuren 1 bis 5, weswegen soweit möglich dieselben Bezugszeichen vergeben werden. Bezüglich der identisch vergebenen Bezugszeichen wird auch auf die obigen Erläuterungen zu den Figuren 1 bis 5 zur Vermeidung von Wiederholungen verwiesen.

Der wesentliche Unterschied zwischen dem Ausführungsbeispiel der Figur 7 und den Figuren 1-6 ist lediglich in der konkret verwendeten Tragstruktur 127 zu sehen. Anstatt einer fachwerkartigen, auf Tragstreben beruhenden Struktur weist das gemäß Figur 7 vorgesehene Modul 121 eine Tragstruktur 127 in Form einer Versteifungsscheibe auf. Die Versteifungsscheibe weist ihrerseits Anschlusspunkte 129 auf, die mit ihrem Bohrbild an eine entsprechende Schnittstelle 17 am Anschlussflansch 11 angepasst sind.

Ferner weist die Tragstruktur 127 gemäß Figur 7 Aufnahmepunkte 130 zur Befestigung entsprechender Aufbauten und Steuergeräte in einer baulichen Einheit auf dem Modul 127 auf. Der prinzipielle Aufbau und die prinzipielle Anordnung der elektrischen Steuergeräte auf dem Modul 121 kann hierbei dem Aufbau des Moduls 21 gemäß den Figuren 2 bis 6 entsprechen. Insoweit wird auf die obigen Ausführungen verwiesen.

Für beide Ausführungsbeispiele gilt im Wesentlichen dieselbe Herangehensweise bei der Durchführung des erfindungsgemäßen Montageverfahrens:
Zunächst wird für die Rotornabe 1 das Nabengehäuse 3 bereitgestellt, welches Teil der Rotornabe 1 ist. Jedem der Anschlussflansche 11 wird sodann ein Modul 21, 121 zugewiesen, welches entweder vorkonfiktioniert bereitgestellt wird oder auf welchem eine Anordnung elektrischer Steuergeräte 25a - e montiert wird, mittels derer die Pitchantriebe 19 angesteuert werden sollen. Die elektrischen Steuergeräte 25a - e werden auf der jeweiligen Tragstruktur 27, 127 als Modul 21, 121 im Ganzen in die Durchgangsöffnung 9 des Anschlussflansches 11 eingeführt, und das Modul 21, 121 wird mit den Anschlusspunkten 29, 129 an der entsprechenden Schnittstelle 17 von außen befestigt. Sobald das Modul 21, 121 befestigt ist, kann zusätzlich an dem Nabengehäuse 3 der Rotornabe 1 ein Blattflanschlager 35 und -ein Blattadapter 37 montiert werden.

Nach erfolgter Montage des Moduls 21 muss lediglich die Verlegung der benötigten Kabelbäume im inneren des Nabengehäuses 3 von der Anordnung elektrischer Steuergeräte 25a - e zu den entsprechenden Antriebsmotoren 19 vorgenommen werden. Eine einzelne, dedizierte Anbringung einzelner Steuergeräte ist allerdings nicht mehr erforderlich. Im befestigten Zustand bewirken sowohl die Tragstruktur 27 als auch die scheibenförmig ausgebildete Tragstruktur 127 eine Versteifung des Anschlussflansches 11, was zur Erhöhung der strukturellen Integrität der Rotornabe 1 insgesamt beiträgt.

## Patentansprüche

1. Rotornabe (1) einer Windenergieanlage (100), mit
einem Nabengehäuse (3), welches mehrere Anschlussflansche (11) aufweist, die jeweils zum Anschluss eines Rotorblatts (108) eingerichtet sind, wobei die Anschlussflansche (11) jeweils eine Flanschebene und eine Durchgangsöffnung (9) aufweisen,
mehreren Pitchantrieben (19), wobei jedes der Rotorblätter mit einem Pitchantrieb (19) zum Drehen des Rotorblatts (108) gekoppelt ist, und
mit einer Anordnung (23) elektrischer Steuergeräte (25a-e), die zur Ansteuerung des Pitchantriebs eingerichtet sind, wobei die Pitchantriebe (19) mit der Anordnung (23) elektrischer Steuergeräte (25a-e) verbunden sind,
wobei die Anordnung (23) der Steuergeräte (25a-e) in einem Modul (21, 121) als bauliche Einheit ausgebildet ist, wobei das Modul (21, 121) als Ganzes an das Nabengehäuse (3) angeschlossen ist,
wobei das Modul (21, 121) eine Tragstruktur (27) aufweist, an welcher die Anordnung (23) der Steuergeräte (25a-e) befestigt ist, wobei die Tragstruktur (27) von außerhalb des Nabengehäuses (3) gegen den ihr jeweils zugeordneten Anschlussflansch (11) befestigt ist,
**dadurch gekennzeichnet, dass** die Tragstruktur eine Mehrzahl von miteinander winklig verbundenen Tragstreben aufweist, und
wobei die Durchgangsöffnung (9) eine auf die Flanschebene projizierte Querschnittsfläche aufweist, und sämtliche Steuergeräte (25a-e) innerhalb der projizierten Querschnittfläche angeordnet sind.

2. Rotornabe (1) nach Anspruch 1,
wobei das Modul (21, 121) eine Schnittstelle (17) zur Befestigung an dem jeweiligen Anschlussflansch aufweist.

3. Rotornabe (1) nach Anspruch 1 oder 2,
wobei die Tragstruktur (27) dazu eingerichtet ist, die Rotornabe (1) insbesondere im Bereich des Anschlussflansches in ihrem installierten Zustand zu versteifen.

4. Rotornabe (1) nach einem der Ansprüche 1 bis 3, wobei die Tragstruktur (27) eine Trittfläche (31) aufweist, welche die Durchgangsöffnung (9) abdeckt.

5. Rotornabe (1) nach einem der Ansprüche 1 bis 4,
wobei die Tragstruktur (127) eine Versteifungsscheibe aufweist.

6. Rotornabe (1) nach einem der vorstehenden Ansprüche,
wobei das Modul (21, 121) ein mit einer Abdeckung (33) versehenes Mannloch aufweist, welches zum Durchtritt von innerhalb des Nabengehäuses (3) in das Rotorblatt (108) hinein ausgebildet ist.

7. Verfahren zur Montage einer Rotornabe (1) einer Windenergieanlage (100), insbesondere einer Rotornabe (1) nach einem der vorstehenden Ansprüche,
umfassend die Schritte:
- Bereitstellen eines Nabengehäuses (3), welches mehrere Anschlussflansche (11) aufweist, die jeweils zum Anschluss eines Rotorblatts (108) eingerichtet sind, wobei die Anschlussflansche (11) jeweils eine Flanschebene und eine Durchgangsöffnung (9) aufweisen, wobei die Durchgangsöffnung (9) eine auf die Flanschebene projizierte Querschnittsfläche aufweist, und jedes der Rotorblätter mit einem Pitchantrieb (19) zum Drehen des Rotorblatts (108) gekoppelt ist, sowie entweder
a) Montieren einer Anordnung (23) elektrischer Steuergeräte (25a-e) zur Ansteuerung des Pitchantriebs derart auf einem Modul (21, 121), dass die Anordnung (23) eine bauliche Einheit ausbildet oder
b) Bereitstellen eines Moduls (21, 121), welches eine Anordnung (23) elektrischer Steuergeräte (25a-e) zur Ansteuerung des Pitchantriebs als bauliche Einheit aufweist;
- Anschließen des Moduls als Ganzes an das Nabengehäuse (3) mittels einer eine Mehrzahl von miteinander winklig verbundenen Tragstreben aufweisenden Tragstruktur (27), an welcher die Anordnung (23) der Steuergeräte (25a-e) befestigt ist, wobei die Tragstruktur (27) von außerhalb des Nabengehäuses (3) gegen den ihr jeweils zugeordneten Anschlussflansch (11) befestigt wird, so dass sämtliche Steuergeräte (25a-e) innerhalb der projizierten Querschnittfläche angeordnet sind, und
- Verbinden der elektrischen Steuergeräte (25a-e) mit dem Pitchantrieb.

8. Verfahren nach Anspruch 7,
wobei die Rotornabe (1) an jedem Anschlussflansch einen Blattadapter (37) aufweist, und der Schritt des Montierens der Module mit den elektrischen Steuergeräten vor dem Montieren des Blattadapters erfolgt.

9. Verfahren nach Anspruch 7 oder 8,
umfassend den Schritt des Versteifens der Rotornabe (1) mittels des Schritts des Anschließens des Moduls.

## Claims

1. A rotor hub (1) of a wind turbine (100) comprising
a hub housing (3) which has a plurality of connecting flanges (11) which are each adapted for connection of a rotor blade (108), wherein the connecting flanges (11) respectively have a flange plane and a through opening (9),
several pitch drives (19), wherein each of the rotor blades is coupled to a pitch drive (19) for rotating the rotor blade (108), and
an arrangement (23) of electrical control devices (25a-e), which are adapted to control the pitch drive, wherein the pitch drives (19) are connected to the arrangement (22) of electrical control devices (25a-e),
wherein the arrangement (23) of the control devices (25a-e) is provided in a module (21, 121) as a structural unit, the module (21, 121) being connected as a whole to the hub housing (3),
wherein the module (21, 121) has a supporting structure (27) to which the arrangement (23) of the control devices (25a-e) is fixed, wherein the supporting structure (27) is fixed from outside the hub housing (3) against the connecting flange (11) respectively associated therewith,
**characterised in that** supporting structure (27) comprises a plurality of supporting struts connected to each other in angular relationship, and
wherein the through opening (9) has a cross-sectional area projected onto the flange plane and all control devices (25a-e) are arranged within the projected cross-sectional area.

2. A rotor hub (1) as set forth in claim 1
wherein the module (21, 121) has an interface (17) for fixing to the respective connecting flange.

3. A rotor hub (1) as set forth in claim 1 or claim 2
wherein the supporting structure (27) is adapted to brace the rotor hub (1) in particular in the region of the connecting flange in its installed state.

4. A rotor hub (1) as set forth in one of claims 1 through 3
wherein the supporting structure (27) has a walkway surface (31) which covers the through opening (9).

5. A rotor hub (1) as set forth in one of claims 1 through 4
wherein the supporting structure (127) has a stiffening disk.

6. A rotor hub (1) as set forth in one of the preceding claims
wherein the module (21, 121) has a manhole which is provided with a cover means (33) and which is adapted for passing through from within the hub housing (3) into the rotor blade (108).

7. A method of assembling a rotor blade (1) of a wind turbine (100), in particular a rotor hub (1) as set forth in one of the preceding claims, including the steps:
- providing a hub housing (3) which has a plurality of connecting flanges (11) which are each adapted for connection of a rotor blade (108), wherein the connecting flanges (11) respectively have a flange plane and a through opening (9), wherein the through opening (9) has a cross-sectional area projected onto the flange plane, and each of the rotor blades is coupled to a pitch drive (19) for rotating the rotor blade (108), and either
a) mounting an arrangement (23) of electrical control devices (25a-e) for controlling the pitch drive on a module (21, 121) in such a way that the arrangement (23) forms a structural unit, or
b) providing a module (21, 121) which has an arrangement (23) of electrical control devices (25a-e) for controlling the pitch drive in the form of a structural unit,
- connecting the module as a whole to the hub housing (3) by means of a supporting structure (27) comprising a plurality of supporting struts connected to each other in angular relationship, to which the arrangement (23) of the control devices (25a-e) is fixed, wherein the supporting structure (27) is fixed from outside the hub housing (3) against the connecting flange (11) respectively associated therewith, such that all control devices (25a-e) are arranged within the projected cross-sectional area, and
- connecting the electrical control devices (25-e) to the pitch drive.

8. A method as set forth in claim 7
wherein at each connecting flange the rotor hub (1) has a blade adaptor (37) and the step of mounting the modules with the electrical control devices is effected priorto mounting of the blade adaptor.

9. A method as set forth in claim 7 or claim 8
including the step of bracing the rotor hub (1) by means of the step of connecting the module.

## Revendications

1. Moyeu de rotor (1) d'une éolienne (100), avec
un boîtier de moyeu (3), lequel présente plusieurs brides de raccordement (11), qui sont mises au point respectivement pour le raccordement d'une lame de rotor (108), dans lequel les brides de raccordement (11) présentent respectivement un plan de bride et une ouverture de passage (9),
plusieurs entraînements de pas (19), dans lequel chacune des pales de rotor est couplée à un entraînement de pas (19) pour faire tourner la pale de rotor (108), et
avec un ensemble (23) d'appareils de commande électriques (25a-e), qui sont mis au point pour le pilotage de l'entraînement de pas, dans lequel les entraînements de pas (19) sont reliés à l'ensemble (23) d'appareils de commande électriques (25a-e),
dans lequel l'ensemble (23) des appareils de commande (25a-e) est réalisé dans un module (21, 121) en tant qu'une unité modulaire, dans lequel le module (21, 121) est raccordé comme un tout au boîtier de moyeu (3),
dans lequel
le module (21, 121) présente une structure de support (27), sur laquelle l'ensemble (23) des appareils de commande (25a-e) est fixé, dans lequel la structure de support (27) est fixée depuis l'extérieur du boîtier de moyeu (3) contre la bride de raccordement (11) qui lui est respectivement associée,
**caractérisé en ce que** la structure de support présente une multitude d'entretoises de support reliées selon un angle les unes aux autres, et
dans lequel l'ouverture de passage (9) présente une surface de section transversale projetée sur le plan de bride, et tous les appareils de commande (25a-e) sont disposés à l'intérieur de la surface de section transversale projetée.

2. Moyeu de rotor (1) selon la revendication 1,
dans lequel le module (21, 121) présente une interface (17) destinée à être fixée sur la bride de raccordement respective.

3. Moyeu de rotor (1) selon la revendication 1 ou 2,
dans lequel la structure de support (27) est mise au point pour renforcer le moyeu de rotor (1) en particulier dans la zone de la bride de raccordement dans son état installé.

4. Moyeu de rotor (1) selon l'une quelconque des revendications 1 à 3, dans lequel la structure de support (27) présente une surface de marche (31), laquelle recouvre l'ouverture de passage (9).

5. Moyeu de rotor (1) selon l'une quelconque des revendications 1 à 4,
dans lequel la structure de support (127) présente un disque de renfort.

6. Moyeu de rotor (1) selon l'une quelconque des revendications précédentes,
dans lequel le module (21, 121) présente un trou d'homme pourvu d'un recouvrement (33), lequel est réalisé pour passer à l'intérieur de la pale de rotor (108) depuis l'intérieur du boîtier de moyeu (3).

7. Procédé de montage d'un moyeu de rotor (1) d'une éolienne (100), en particulier d'un moyeu de rotor (1) selon l'une quelconque des revendications précédentes,
comprenant les étapes :
- de fourniture d'un boîtier de moyeu (3), lequel présente plusieurs brides de raccordement (11), qui sont mises au point respectivement pour le raccordement d'une pale de rotor (108), dans lequel les brides de raccordement (11) présentent respectivement un plan de bride et une ouverture de passage (9), dans lequel l'ouverture de passage (9) présente une surface de section transversale projetée sur le plan de bride et chacune des pales de rotor est couplée à un entraînement de pas (19) pour faire tourner la pale de rotor (108), et soit
a) le montage d'un ensemble (23) d'appareils de commande électriques (25a-e) destinés à piloter l'entraînement de pas de telle manière sur un module (21, 121) que l'ensemble (23) réalise une unité modulaire, soit
b) la fourniture d'un module (21, 121), lequel présente un ensemble (23) d'appareils de commande électriques (25a-e) destinés à piloter l'entraînement de pas en tant qu'unité modulaire ;
- de raccordement du module en tant qu'un tout au boîtier de moyeu (3) au moyen d'une structure de support (27) présentant une multitude d'entretoises de support reliées selon un angle les unes aux autres, sur laquelle l'ensemble (23) des appareils de commande (25a-e) est fixé, dans lequel la structure de support (27) est fixée contre la bride de raccordement (11) qui lui est associée depuis l'extérieur du boîtier de moyeu (3) si bien que tous les appareils de commande (25a-e) sont disposés à l'intérieur de la surface de section transversale projetée, et
- de liaison des appareils de commande électriques (25a-e) à l'entraînement de pas.

8. Procédé selon la revendication 7,
dans lequel le moyeu de rotor (1) présente sur chaque bride de raccordement un adaptateur de pale (37), et
l'étape du montage des modules avec les appareils de commande électriques se fait avant le montage de l'adaptateur de pale.

9. Procédé selon la revendication 7 ou 8,
comprenant l'étape de renforcement du moyeu de rotor (1) au moyen de l'étape du raccordement du module.
